# EUROPEAN PATENT APPLICATION

(11) **EP 2 005 812 A1**
(43) Date of publication of application: **24.12.2008**
(21) Application number: 07012294.0
(22) Date of filing: 22.06.2007
(51) Int. Cl.: A01C 11/00, A01C 1/00

(54) **A method for growing sugarcane**

(71) Applicant: Syngenta Participations AG, 4058 Basel (CH)
(72) Inventor: The designation of the inventor has not yet been filed
(74) Representative: Arunasalam, Velautha-Cumaran

(57) **Abstract**

A method of growing a crop plant that is grown from a stem section that is planted horizontally, characterized in tha a substantial proportion of the stem sections of the crop that is planted or sown has one bud per stem section.

## Description

The present invention relates to a method of growing a crop that is grown from a stem section that is planted horizontally, characterized in that a substantial proportion of the stem sections of the crop that is planted or sown has one bud per stem section, and to a defined stem section having available therefor one or more certain substances and/or compounds.

A crop that is planted horizontally is, for example, sugar cane. Sugar cane acreage is increasing, and its uses include the production of sugar, Falernum, molasses, rum, cachaça (the national spirit of Brazil) and ethanol for fuel. The bagasse that remains after sugar cane crushing can be used to provide both heat energy, used in the mill, and electricity, which is typically sold to the consumer electricity grid. Therefore better agricultural practices for its growth are sought.

A seed of sugar cane is a dry one-seeded fruit or caryopsis formed from a single carpel, the ovary wall (pericarp) being united with the seed-coat (testa). The seeds are ovate, yellowish brown and very small, about 1 mm long. However, for commercial agriculture, the seed of a sugar cane is not sown or planted, but the cane cuttings (also known as a stem section (or part of a stalk or culm or seediing)) of 40-50 cm in length are placed horizontally in furrows which are generally wide at ground level & deep (40 to 50 cm wide and 30 to 40 cm deep), and then lightly covered with soil.

The stem of sugar cane comprises generally several nodes and internodes as in other grasses. The node consists of the bud (or gemma) of the sugar cane which-grows to yield the crop. Suitable material for cuttings are pieces of cane cut from 8-14 month-old healthy plant, with the older basal buds or buds in the middle to top of the stem germinating stronger and faster. The cuttings are taken from plants which themselves have generally grown from cuttings.

The nodes range from 4 to 10 inches apart along the above-ground section of the stem. At each node a broad leaf rises which consists of a sheaf or base and the leaf blade. The sheaf is attached to the stem at the node and at that point entirely surrounds the stem with edges overlapping. The sheath from one node encircles the stem up to the next node above and may overlap the base of the leaf on the next higher node. The leaf blade is very long and narrow, varying in width from 1 to 3 inches and up to 5 feet or more in length. Also, at each node along the stem is a bud, protected under the leaf sheath. When stem sections are planted by laying them horizontally and covering with soil a new stem grows from the bud, and roots grow from the base of the new stem. The stem branches below ground so several may rise as a clump from the growth of the bud at a node.

In planting sugar cane fields, mature cane stems are cut into sections, either manually in the furrows or by automation and laid horizontally in furrows. In continental United States cuttings with several nodes are laid while in tropical countries sections with 2 or 3 nodes are commonly used - since temperatures for growth are more favorable.

The cuttings can be prepared either manually or by mechanical means. Manual preparation involves manually cutting the longer cuttings in the furrow into smaller stem sections having on average three buds; and so a stem section could unintentionally have one bud because of the overlap between the cuttings in the furrow. When mechanical means are used for preparing the cuttings, the stem sections generally have 2 to 3 buds per stem section and these then placed in the furrows also with aid of mechanical means. Once planted, a stand of cane can be harvested several times; after each harvest, the cane sends up new stems, called ratoons. Usually, each successive harvest gives a smaller yield, and eventually the declining yields justify replanting. Depending on agricultural practice, two to ten harvests may be possible between plantings. After planting, the crop is sprayed with water, fertilizer, and pesticides, such as herbicides, insecticides.

Planting is in rows about 6 feet apart to make possible cultivation and use of herbicides for early weed control. As plants become tall lower leaves along the stems are sbaded and die. These ultimately drop off, so only leaves toward the top remain green and active.

These existing agricultural practices with for example, sugar cane, show several disadvantages such as the requirement of use of numerous workmanship to cut the stem, use of different kinds of bulky machines, many steps and low efficiency. This scenario usually leads to high costs of operation and logistic and undesirable risks for people working in field when cutting the stems. Additionally, one of the greatest disadvantages is that the cutting is cut in a long length of about 40 cm, especially when automated, more specifically about 37 cm, in order to ensure that there will be at least two or three buds (or also known as gemmas) per part of cutting, which requires large areas for processing and incurs higher costs. Further, once cut the larger stem sections require big areas to stock bringing further increased costs for the process. Also, the planting of the known stem sections requires a high weight of stem sections per hectare, such as 16-18 ton/ha (by mechanic planting) or 12-16 ton/ha (by conventional planting).

Applicant has found that using a certain defined stem section and planting the stem sections (or cuttings) in a field so that a substantial proportion of the stem sections of the crop that is planted or sown has one bud per stem section, the disadvantages of the state of art can be overcome.

Accordingly, in a first aspect the present invention provides a method of growing a crop that is grown from a stem section that is planted horizontally, characterized in that a substantial proportion of the stem sections of the crop that is planted or sown has one bud per stem section.

In an embodiment, greater than 50, such as at least 60, preferably at least 70, more preferably at least 80, most preferably at least 90, advantageously at least 95, especially at least 98, % based on the total number, of the planted or sown stem sections have one bud per stem section. In a preferred embodiment, each stem section has one bud.

In a second aspect, the present invention provides a stem section of a crop of the first aspect having available therefor one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); and/or exhibit safening activity against pesticide (e.g a safener).

In a third aspect, the present invention provides a stem section of a crop plant of the first aspect having available therefor one or more substances that ensures germination and/or storage of the stem section.

In a fourth aspect, the present invention provide a method of protecting a stem section of a crop plant of the first aspect, a plant or part of the plant that grows at a later point in time against attack by a,pest and/or pathogen comprising (i) making available to the stem section a compound defined in the second aspect and/or (ii) applying a compound defined in the second aspect to the locus of the stem section

In a fifth aspect, the present invention provide a method of protecting a stem section of a crop plant of the first aspect, a plant or part of the plant that grows at a later point in time against the phytotoxicity of a pesticide (e.g. herbicide) applied at a later point in time, which comprises treating the stem section, preferably before it is sown of planted, with a compound having antidotal characteristics to that pesticide.

In a sixth aspect, the present invention provide a method of improving the growth of a crop plant of the first aspect comprising either (i) making available to the stem section one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); or that exhibit safening activity against pesticide (e.g a safener) and/or (ii) applying to the locus of the stem section one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); or that exhibit safening activity against pesticide (e.g a safener).

The present invention, therefore, allows cost-effective methods having logistic advantages for cultivating a crop, such as sugar cane, through improved handling, storage, planting and growth.

Further, in an embodiment of the fourth aspect, the cutting (or stem section) of the present invention, and plant and part of the plant that grows at a later point in time is able to more effectively withstand pest and/or pathogen pressure.

In an embodiment, a particular advantage of the present invention also allows less dependency on ideal soil moisture conditions for planting and/or for longer storage and easier handling of the defined stem section of the third aspect.

The invention also provides a method of growing a crop of the first aspect in moist and humid soils, but also dry soils (e.g. sandy soils), especially when appropriate irrigation is present.

### Description of the Figures:

The present invention will be described in more details based on the following figures:
Figure 1 illustrates a conventional method for cultivating sugarcane.

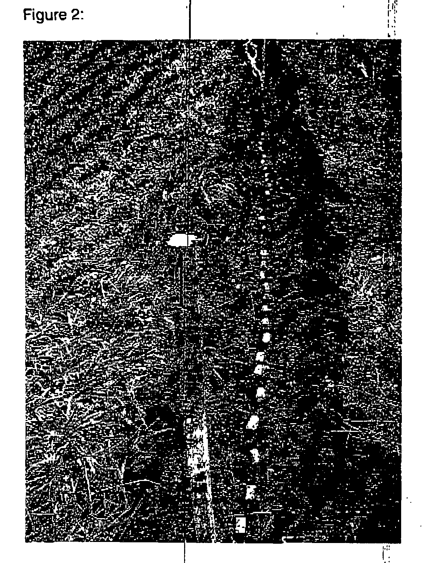

Figure 2 illustrates an embodiment of the present invention.

The invention is described in detail below.

Examples of crops suitable for the present invention include sugar cane, BAMBU, sorghum halepense. These crop plants are generally planted or sown in long stem sections in a furrow horizontally.

Sugarcane or sugar cane *(Saccharum)* is a genus of 6 to 37 species (depending on taxonomic interpretation) of tall; grasses (family Poaceae, tribe Andropogoneae), native to warm temperate to tropical regions of the Old World. They have stout, jointed, fibrous stems that are rich in sugar and measure 2 to 6 meters tall. All of the sugarcane species interbreed, and the major commercial cultivars are complex hybrids.

Specific examples of species include *Saccharum arundinaceum, Saccharum bengalense, Saccharum edule, Saccharum officinarum, Saccharum procerum, Saccharum ravennae, Saccharum robustum, Saccharum sinense, Saccharum spontaneum*

In respect of sugar cane, there are several varieties or cultivars and germplasms which can be used in combination with the present invention for improved methods of growing a sugar cane crop.

The crop can also be a transgenic crop, which is transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application. Also suitable are crop plants with particular trait characteristics built in, such as drought resistance, "terminator' or improved quality, such as enhanced sugar or ethanol content.

Examples of cultivars are RB 72-454; RB 85-5156 ; RB 85-5453; RB 83-5486; RB 85-5536; RB 86-7515; RB 84-5257; RB 85-5113; RB 85-5035; RB 84-5210; RB 92-8064; SP-72-1011; SP 79-1011; SP 91-3011; SP 77-5181; SP 84-1431; SP 83-5073; SP 85-3877; SP 83-2847; SP 84-5560; SP 81-3250; SP 80-3280; SP 80-1816; SP 87-396; SP 80-1842; SP 86-42; SP 91-1049; SP 90-3414; SP 90-1638; SP 86-155; SP 87-365; SP 84-2025; SP 89-1115; I.A.C.91-2195; I.A.C.96-2210; I.A.C 87-3396; I.A.C.93-6006; I.A.C.91-2218; and I.A.C.91-5155. A preferred cultivar of the sugarcane is known as SP-72-1011.

The cutting (or part of the stalk, or culm or stem section) for planting according to the invention preferably has defined characteristics, such as having one bud (or gemma) and/or defined length.

In an embodiment, the length of the stem section is about 2 to about 20, preferably about 2.5 to about 18, more preferably about 3 to about 17 cm, especially about 4 to about 16, cm

In an embodiment, the stem section is of a minimum length that the section contains one bud.

The present invention is suitable for the different types of nodes (e.g. tall root band, contricted root band, conoidal root band and obconoidal root band) and internodes (e..g. cylindrical, tumescent, bobbin-shaped, conoidal, obconoidal and concave-convex).

A stem section containing one bud can be obtained by manually cutting the cutting to the desired lengths (for example, with a machete) or by mechanical or automated means.

Also envisaged in the present invention is cutting of the long stem sections to a predetermined length by a suitable cutting means, which can be laser cutting, plasma cutting, water jet cutting, or suitable blades. The cutting means may also have an image analysis and adequate controls to allow precise cutting of the stem section to a predetermined length and/or having one bud. The means for cutting should not unacceptably damage the germinating potential of the bud.

An example of a mechanical means is described in JP 10-313611, and which is incorporated herein in entirety, which cuts a sugarcane with the disk cutter of a rotating type, in order to obtain the desired length of the stem section.

In a preferred embodiment of the invention, the stem sections according to the invention are obtained by a mechanical or non-manual means from longer lengths of stem sections.

The stem sections can be planted or sown manually or with a mechanical means. In an embodiment, the stem section are applied to the soil so that there are from about 2 to about 200, preferably about 2 to about 100, more preferably about 4 to about 75, especially about 5 to about 40, advantageously 6 to 30, buds per linear meter in the soil.

In an embodiment, the distance between each stem section applied to soil varies from 0.5 to 50, preferably 1 to 40, more preferably 2 to 30, especially 3 to 20, cm.

The planting or sowing according to the invention can follow conventional practices, such as planting or sowing in a furrow, whether by hand or by a mechanical means; or each stem section ca be planted or sown in discrete positions in a field, whether by hand or by a mechanical means.

In the instance of in-furrow planting or sowing, a particular advantage of the invention is that the width of the furrow is substantially less than conventional planting of sugar cane. Typically the width at ground level can be 10-20 cm and the depth is 30-40 cm: this minimizes ploughing and enables shallow harrowing.

In an embodiment of the invention, the stem sections may also be planted with a standard potato tuber planting machines with belt and buckets. In such a case, the stem section is of a defined dimension so that planting can occur. Methods for achieving stem section of a defined dimension can be via known technologies, such as pelleting and coating.

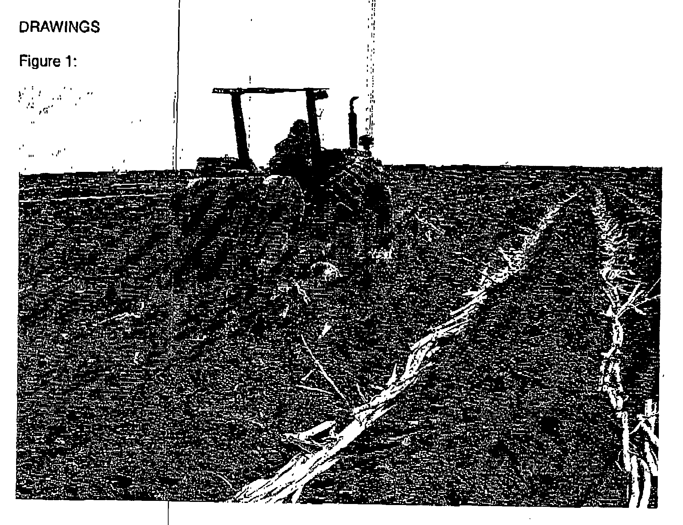

Contrarily to the conventional art, as illustrated in Figure 1, where 12 to 20 ton per ha of sugar cane cuttings are required, the present invention provides for about 0.5 to 5 ton per ha.

The aspect of preparing the field, opening the furrow and closing the furrow, drilling the holes or planting the stem sections according to the invention can be carried out by conventional methods. However, the present invention enables use of less bulky machinery for cultivating sugar cane.

After the crop plant is grown, conventional methods of harvesting can be employed.

A particular advantage of the present invention is that successive planting of stem sections requires minimum tillage or harrowing of the field since the defined section can be planted between the existing rows of sugar cane crops since the furrows are not as wide as conventional practice. Therefore, in an embodiment, the crop defined in the first aspect, preferably sugarcane, can be cultivated through a farming practice referred to as "no till planting or minimum tillage", which is an innovation in the method for cultivating this kind of crop. Soya, corn and wheat, for example, are known to be cultivated by no till planting; however, sugar cane, for example, is not cultivated by this practice at present. Accordingly, the present invention also provides a method of cultivating a crop defined in the first aspect comprising the steps defined in the first step, and optionally harvesting the crop.

Conventional sugar cane preparatory practices (such as warm water treatment of the cuttings, treatment of the cuttings with mercury preparations, not to plant the cuttings too deep, manage the direct contact of the cuttings with fertilizer, ensure sufficient soil moisture, application of pesticides (e.g. herbicide, insecticide, nematicide, etc) to the field and plant, ensure good soil aeration and soil temperature can also be carried out prior to, during or after the planting of the defined stem sections of the invention.

The present invention provides the following advantages regarding the use of a predetermined length of the stem section:
- Requirement of a smaller area to prepare and stock and the defined stem sections (or culms, or seedlings). For example, to plant about 1.5 Mha of sugar cane cultivated area the conventional and mechanized cultivation usually requires, respectively, about 120 Kha and 250 Kha and about 12 ton/ha and 18 ton/ha, respectively, of sugar cane cuttings; in contrast, the present invention provides for 30 to 80 Kha and about 1.5 ton/ha of sugar cane cuttings to produce the mentioned about 1.5 Mha of cultivated area.
- Higher security for the workers in field;
- Minimizes soil erosion, especially in tropical climates with heavy rainfall;
- Minimizes soil compaction because of less bulky machinery
- Preserves soil moisture because of minimum tillage or no till;
- Reduced operational costs; and
- Easier cultivating method.

The most important sugarcane pests are the larvae of some lepidoptera species, including turnip moth, the sugarcane borer, *Diatraea saccharalis* and the Mexican rice borer *(Eoreuma loftini),* leaf-cutting ants, termites, spittlebugs (especially *Mahanarva fimbriolata* and *Deois flavopicta)* and the beetle *Migdolus fryanus,* among others. Also nematodes can cause damage to the crop, such as. *Pratylenchus* spp., *Meloidogyne* spp., *Helicotylenchus* spp., *Rotylenchus* spp., and *Scutellonema* spp.

Sugar cane is also affected by disease, such as:

### Bacterial diseases

- Gumming disease: *Xanthomonas campastris* pv. *vasculorum*
- Leaf scald: *Xanthomonas albilineans*
- Mottled stripe: *Herbaspirillum rubrisubalbicans*
- Ratoon stunting disease!: *Leifsonia xyli* subsp. *xyll*
- Red stripe (top rot): *Acidovorax* avenae

### Fungal diseases

- Banded sclerotial (leaf) disease: *Thanatephorus cucumeris = Pellicularia sasakii Rhizoctonia solani* [anamorph]
- Black rot: *Ceratocystis adiposa Chalara* sp. [anamorph]
- Black stripe: *Cercospora atrofiliformis*
- Brown spot: *Cercospora longipes*
- Brown stripe: *Cochliobolus stenospilus Bipolaris stenospila,* [anamorph]
- Downy mildew: *Peronosclerospora sacchari = Sclerospora sacchari*
- Downy mildew, leaf splitting form: *Peronosclerospora miscanthi = Sclerospora miscanthi Mycosphaerella striatiformans*
- Eye spot: *Bipolaris sacchari = Helminthosporium sacchari Gibberella fujikuroi*
- Fusarium sett and stem rot: *Fusarium moniliforme* [anamorph] *G*. *subglutinans*
- Iliau: Clypeoporthe *iliau* = Gnomonia *iliau Phaeocytostroma, iliau* [anamorph]
- Leaf blast: *Didymosphaeria taiwanensis*
- Leaf blight: *Leptosphaeria taiwanensis Stagonospora taiwanensis* [anamorph]
- Leaf scorch: *Stagonospora sacchari*
- Marasmius sheath and shoot blight: *Marasmiellus stenophyllus* = *Marasmius stenophyllus*
- Myriogenospora leaf binding (tangle top): *Myriogenospora aciculispora*
- Phyllosticta leaf spot: *Phyllosticta hawaiiensis*
- Phytophthora rot of cuttings: Phytophthora spp,
*P. megasperma*
- Pineapple disease: *Ceratocystis paradoxa Chalara paradoxa* = *Thielaviopsis paradoxa* [anamorph]
- Pokkah boeng (that may have knife cut symptoms): *Gibberella fujikuroi*
*Fusarium moniliforme* [anamorph]
*G. subglutinans*
- Red leaf spot (purple spot): *Dimeriella sacchari*
- Red rot: *Glomerella tucumanensis* = *Physalospora tucumanesis Colletotrichum falcatum* [anamorph]
- Red rot of leaf sheath and sprout rot: *Athelia roisfii* = *Pellicularis rolfsii Sclerotium rolfsii* [anamorph]
- Red spot of leaf sheath: *Mycovellosiella vaginae* = *Cercospora vaginae*
- Rhizoctonia sheath and shoot rot: *Rhizoctonia solani*
- Rind disease (sour rot): *Phaeocytostroma sacchari* = *Pleocyta sacchari* = *Melanconium sacchariv*
- Ring spot: *Leptosphaeria sacchari Phyllosticta* sp. [anamorph] *Marasmius sacchari Pythium arrhenomanes*
- Root rots: *P. graminicola*
*Rhizoctonia* sp.
Unidentified Oomycete
- Rust, common: *Puccinia melanocephala* = *P. erianthl*
- Rust, orange: *Puccinia kuehnii*
- Schizophylium rot: *Schizophyllum commune*
- Sclerophthora disease: *Sclerophthora macrospora*
*Alternaria alternata*
*Bipolaris sacchari*
*Cochliobolus hawallensis*
*Bipolaris hawallensis* [anamorph]
- Seedling blight: *C. lunatus*
*Curvularia lunata* [anamorph]
*Curvularia senegalensis*
*Setosphaeria rostrata*
*Exserohilum rostratum* [anamorph] = *Drechslera halodes*
- Sheath rot: *Cytospora sacchari*
- Smut, culmicolous: *Ustilago scitaminea*
- Target blotch: *Helminthosporium sp.*
- Veneer blotch: *Deightoniella papuana*
- White rash: *Elsinoe sacchari*
*Sphaceloma sacchari* [anamorph]
- Wilt: *Fusarium sacchari = Cephalosporium sacchari*
- Yellow spot: *Mycovellosiella koepkei = Cercospora koepkei*
- Zonate leaf spot: *Gloeocercospora sorghi*

### Viral diseases

- Chlorotic streak: Virus (putative)
- Dwarf: Sugarcane dwarf virus
- Fiji disease: Sugarcane Fiji disease virus
- Grassy shoot: MLO
- Mosaic: Sugarcane mosaic virus
- Sereh: Virus (putative)
- Streak disease: Maize streak virus, sugarcane strain
- White leaf: MLO

Therefore, compounds that exhibit either stimulatory or growth-promoting activity (*e.g.*, nutrients, fertilizers, micronutrient donors, biological agents, inoculants, antibiotics); or that exhibit inhibitory activity towards pests and/or pathogens (e.g. a pesticide), can be applied to the soil or to the locus of the stem section.

Such compounds can be applied to the field before, during and/or after the planting or sowing of the sugar cane cuttings to control pathogenic and/ or pest damage and to promote the growth of the crop.

Further, weed control agents can also be applied to ensure control of undesired vegetation. In an embodiment, one or more compounds that exhibit safening activity against pesticide (e.g a safener) can also be applied to the soil or locus of the stem section, in particular when to manage the phytotox of a herbicide.

The pesticides, including weed control agents, and mixtures thereof can be of any type suitable for the circumstances and are known to a skilled person.

Methods for applying the compounds to the soil or locus of the stem section are known to a skilled person, and conventionally practiced.

In an embodiment, one or more neonicotinoid compounds, fipronil, and strobilurin compounds are applied to or to the locus of the stem sections in the soil.

Examples of neonicotinoid compounds are acetamiprid, clothianidin, dinotefuran, imidacloprid, nitenpyram, thiacloprid, thiamethoxam. Preferred neonicotinoid insecticides include clothianidin, thiacloprid, imidacloprid and thiamethoxam. Particularly preferred neonicotinoid insecticides include thiamethoxam, clothianidin and imidacloprid.

Examples of suitable strobilurin compounds are azoxystrobin, pyraclostrobin, picoxystrobin, fluoxastrobin and trifloxystrobin.

The rates of application of the pesticides can vary, for example, according to the specific active ingredient, but is such that the active ingredient(s) provide(s) the desired enhanced action and can be determined by routine experimental trials. Typical application rates, for example, of thiamethoxam can be, for example 50 to 500, preferably 75 to 400, more preferably 80 to 350, especially 100 to 300, gal/ha.

In an embodiment the stem section has available therefor one or more compounds selected from compounds that exhibit either stimulatory or growth-promoting activity (*e.g.*, nutrients, fertilizers, micronutrient donors, biological agents, inoculants, antibiotics); that exhibit inhibitory activity towards pests and/or pathogens (e.g. a pesticide); and/or exhibit safening activity against pesticide (e.g a safener); and/or one or more substances that ensures germination and/or storage of the stem section.

The compounds and/or substances can be made available to a stem section by any suitable means. A skilled person would understand that the phrase "made available" or "has available therefor" refers to the stem section being positioned in the proximity of the compounds and/or substances so that the benefits of the compounds and/or substances can be achieved.

Examples of suitable means are treatment of the stem section and encapsulation of the stem section.

Methods for treating compounds, mixtures and compositions thereof on to stem sections include immersing, dressing, coating, pelleting, soaking, tumbling, spraying, injection. The treatment is by a method such that the germination is not induced of the bud. As a result of the treatment, the active ingredients form part of the stem section, for example, are adhered on to the stem section and therefore available for pathogenic and/or pest control.
Accordingly, in an embodiment, the present invention provides a pest and/or pathogenic-resistant stem section.

In an embodiment, the stem section is treated before it is sown or planted with one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); and/or that exhibit safening activity against pesticide (e.g a safener); so that the sown stem section has been pro-treated with one or more compounds. The treated stem section can, for example, be of any size or dimension provided that the stem section contains one bud per stem section.

The stem section can also be treated with one or more substances that ensures germination and/or storage of the stem section.

Suitable substances for pelleting include one or more of binders and one or more fibrous materials. Examples of fibrous material are pulp, and fibers from leaf or stem residues, especially of sugar cane. Molasses of the cane sugar may also be used as a sticker (polymer) to bind the fibers for the shaping of the stem sections having one bud.

Binders are useful in the coating and pelleting treatment methods. Binders that are useful in the present invention preferably comprise an adhesive polymer that may be natural or synthetic and is without phytotoxic effect on the buds to be coated. Examples of binders are polyvinyl acetates, polyvinyl acetate copolymers, celluloses, including ethylcelluloses, methylcelluloses , hydromethylcelluloses, hydroxypropylcelluloses and carboxymethylcelluloses; polyvinylpyrolidones, polysaccharides, including starch, modified starch, dextrins, maltodextrins, alginate and chitosans; fats; oils; proteins, including gelatin and zeins; gum arabics, shellacs; vinylidene chloride and vynilidene chloridecopolymers; calcium lignosulfonates; acrylic copolymers; polyvinylacrylates; polyethylene oxide; acrylamide polymers and coplymers; polyhydroxyethyl acrylate, methylacrylamide monomers and polychloroprone.

Also pelleting of the stem section would help the bud to withstand mechanical damage, as well as allow easier planting.

In an embodiment, the stem section having one bud, preferably each bud, is pelleted or coated with one or more compounds and/or one or more substances.

Methods for encapsulating the one or more compounds and/or substances and the stem section can be any suitable technology that maintains the stem section and the compounds and/or substances in proximity. Examples include capsule and "bag" technologies that biodegrade under specific pre-determined conditions, such as time, moisture or temperature: see for example WO03045139, WO8806839, US620925. The compounds and/or substances are encapsulated with the stem section, optionally the stem section can also be treated with one or more compounds and/or substances.

In a preferred embodiment, a stem section having one bud and one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); and/or that exhibit safening activity against pesticide (e.g a safener), and/or one or more substances that ensures germination and/or storage of the stem section are packed in a degradable casing.

In an embodiment, the compound made available to the stem section before planting or sowing can be an insecticide, termiticide, acaricide, miticide, nematicide, molluscide or fungicide.

Examples of suitable pesticidal compounds are cyanoimine, acetamiprid, nitromethylene, nitenpyram, clothianidin, dimethoate, dinotefuran, fipronil, lufenuron, flubendamide, pyripfoxyfen, thiacloprid, fluxofenine, imidacloprid, thiamethoxam, beta cyfluthrin, fenoxycarb, lamda cyhalothrin, diafenthiuron, pymetrozine, diazinon, disulphoton; profenofos, furathiocarb, cyromazin, cypermethrin, tau-fluvalinate, tefluthrin, chlorantraniliprole Flonicamid, Metaflumizone, Spirotetramat, Bacillus thuringiensis products; azoxystrobin; acibenzolor s-methyl, bitertanol; carboxin; Cu₂O; cymoxanil; cyproconazole; cyprodinil; dichlofluamid; difenoconazole; diniconazole; epoxiconazole; fenpiclonil; fludioxonil; fluoxastrobin, fluquiconazole; flusilazole; flutriafol; furalaxyl; guazatin; hexaconazole; hymexazol; imazalil; imibenconazole; ipconazole; kresoxim-methyl; mancozeb; metalaxyl; R-metalaxyl; metconazole; myclobutanil, oxadixyl, pefurazoate; paclobutrazole, penconazole; pencycuron; picoxystrobin; prochloraz; propiconazole; pyroquilone; SSF-109; spiroxamin; tebuconazole; thiabendazole; thiram, tolifluamide; triazoxide; triadimefon; triadimenol; trifloxystrobin, triflumizole; triticonazole, uniconazole, a compound of formula A 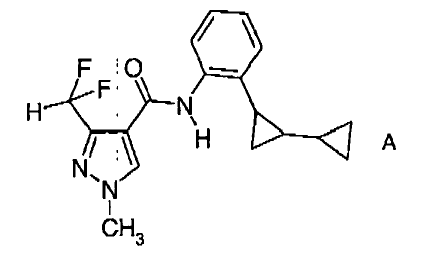 or a tautomer of such a compound, and a compound of formula B 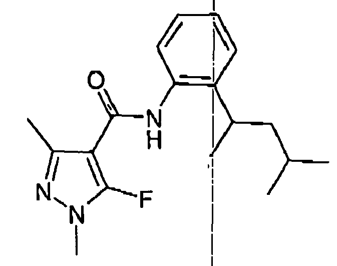 B, or a tautomer of such a compound.

Two or more mixtures of any combinations of the pesticidal compounds are also envisaged in the present invention for treatment of the stem section.

The compounds are treated in an amount sufficient to control the pathogen and/or pest, and can be determined by routine experimental trials

For example, typical application rates, for example, of thiamethoxam can be, for example 50 to 500, preferably 75 to 400, more preferably 80 to 350, especially 100 to 300, gai/ha; and abamectin can be treated at rates of from 30 to 300 g ai/ha.

Examples of nutrients include arginine, other amino acid compositions, and inorganic salts such as calcium sulfate CaSO₄, calcium nitrate Ca(NO₃)₂*4H₂O, calcium carbonate CaCO₃, potassium nitrate KNO₃, magnesium sulfate MgSO₄, potassium hydrogen phosphate KH₂PO₄, manganese sulfate MnSO₄, copper sulfate CuSO₄, zinc sulfate ZnSO₄, nickel chloride NiCl₂, cobalt sulfate CoSO₄, potassium hydroxide KOH, sodium chloride NaCl, boric acid H₃BO₃ and metal salts thereof, Na₂MoO₄. Preferred additional nutrients are urea, melamine, potassium oxide, and inorganic nitrates.

Examples of micronutrient donors are Mo, Zn and Co compounds.

Examples of inoculants include nitrogen-fixing agents (such as SBN) and also applicable can be plant inducers (e.g. nod factors - see US2005187107, which is hereby incorporated).

Examples of biological agents can be selected from one or more of a fungus, bacteria, or other agent, such as NST, which solubilises phosphorus in the soil for improved root uptake.

In an embodiment, the stem section has available therefor one or more substances that ensures germination and/or storage of the stem section.

Suitable substances are those that provide for retention of moisture. Such compounds are known in the art.

The means for making available the compounds and/or substances may also have technologies that allow controlled release of the compounds and/or substances.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
a plant, part of the plant or stem section to such a level that an improvement is demonstrated.

Each of pesticidal compounds alone or in admixture has very advantageous properties for protecting plants against (i) pathogenic, such as phytopathogenic, especially fungi, attack or infestation, which result in disease and damage to the plant and/or (ii) pest attack or damage; particularly in the instance of plants, the present invention can control or prevent pathogenic damage and/or pest damage on a stem section, parts of plant, plant organs and/or plant grown from the treated stem section. In some cases, control against pest attack or damage also indirectly results in control against pathogenic attack, and vice-a-versa.

In the instance of agriculture, the enhanced actions are found to show an improvement in the growing characteristics of a plant by, for example, higher than expected control of the pathogenic infestation and/or pest damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased, by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant (or crop), as described above, or both the yield and the vigor of the plant.

Accordingly, the present invention also provides a method of improving the growing characteristics of a crop (or plant) defined in the first aspect, which comprises applying to the stem section defined in the first aspect or locus thereof, a compound as defined in second aspect.

In an embodiment, the present invention provides a method for growing a crop defined in the first aspect having one bud per stem section.

In a particular embodiment, the present invention provides for improved germination of the stem sections having one bud, especially those younger and/or lower stem buds, because of improved root growth.

In an embodiment, one or more neonicotinoid compounds, fipronil, and strobilurin compounds are treated to a stem section having one bud, preferably treated to a bud.

Examples of neonicotinoid compounds are acetamiprid, clothianidin, dinotefuran, imidacloprid, nitenpyram, thiacloprid, thiamethoxam. Preferred neonicotinoid insecticides include clothianidin, thiacloprid, imidacloprid and thiamethoxam. Particularly preferred neonicotinoid insecticides include thiamethoxam, clothianidin and imidacloprid.

Examples of suitable strobilurin compounds are azoxystrobin, pyraclostrobin, picoxystrobin, fluoxastrobin and trifloxystrobin.

The rates of application of the pesticides can vary, for example, according to the specific active ingredient, but is such that the active ingredient(s) provide(s) the desired enhanced action and can be determined by routine experimental trials. Typical application rates, for example, of thiamethoxam can be, for example 50 to 500, preferably 75 to 400, more preferably 80 to 350, especially 100 to 300, gai/ha.

Other pesticides can also be treated to the stem section alone or in combination with one or more neonicotinoid compounds, fipronil, and strobilurin compounds.

Even distribution of the compounds (e.g. active ingredients) and adherence thereof to the stem section is desired during the treatment. Treatment could vary from a thin film (dressing) of the formulation containing the active ingredient(s) on a stem section, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The active ingredients are generally applied to the stem section in a form of a conventional formulation.

As with the nature of the formulations, the methods of application, such as drench, spraying, atomizing, dusting, scattering, coating or pouring, are chosen in accordance with the intended objectives and the prevailing circumstances.

The treatment of the defined stem section before planting or sowing would overcome the disadvantages associated the need for the expensive equipment required for topical in situ application of such compounds to growing plants, to reduce the waste associated with the topical in situ application to growing plants, to reduce the run-off associated with such topical applications and the resulting need for repeated re-application of the compounds. This approach also minimizes or eliminates the need for expensive and cumbersome aerial application of products that have sometimes caused environmental concerns. Furthermore, the exposure of the workers to such compounds can be minimized.

Use of a term in a singular form also encompasses that term in plural form and vice a versa.

The pesticidal compounds described herein are known and a description of their structure as well as the structures of other pesticides (e.g., fungicides, insecticides, nematicides) can be found in the e-Pesticide Manual, version 3.1, 13th Edition, Ed. CDC Tomlin, British Crop Protection Council, 2004-05.

The compounds of formula A and its manufacturing processes starting from known and commercially available compounds is described in WO 03/074491, WO 2006/015865 and WO 2006/015866.

The compound of formula B is described in WO 03/010149 and WO 05/58839.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

## Claims

1. A method of growing a crop plant that is grown from a stem section that is planted horizontally, **characterized in that** a substantial proportion of the stem sections of the crop that is planted or sown has one bud per stem section.

2. The method according to claim 1 wherein the crop is selected from sugar cane, sorghum halepense and bamboo, preferably sugar cane.

3. The method according to either claim 1 or claim 2 wherein greater than 50, such as at least 60, preferably at least 70, more preferably at least 80, most preferably at least 90, advantageously at least 95, especially at least 98, % based on the total number, of the planted or sown stem sections have one bud per stem section.

4. The method according to any one of claims 1 to 3 wherein each stem section is from 2 cm to 20 cm in length, preferably 2.5 to 18, more preferably 3 to 17, cm, in length.

5. The method according to any one of claims 1 to 4 wherein each stem section is obtained by a mechanical means.

6. The method according to any one of claims 1 to 5 wherein the distance between each stem section applied to soil varies from 0.5 to 50, preferably 1 to 40, more preferably 2 to 30, especially 3 to 20, cm.

7. The method according to any one of claims 1 to 6 wherein the crop is cultivated through a minimum tillage or no till planting.

8. The method according to any one of claims 1 to 7 wherein there are from 2 to 200, preferably 2 to 100 more preferably 4 to 75, especially 10 to 40, buds per linear meter in the soil.

9. The method according to any one of claims 1 to 8 wherein to the locus of the stem sections is applied one or more compounds selected from compounds that exhibit either stimulatory or growth-promoting activity (*e.g.,* nutrients, fertilizers, micronutrient donors, biological agents, inoculants, antibiotics); that exhibit inhibitory activity towards pests and/or pathogens (e.g. a pesticide); and/or that exhibit safening activity against pesticide (e.g a safener).

10. The method according to any one of claims 1 to 9, wherein one or more compounds defined in claim 9 and/or one or more substances that ensures germination or storage of the stem section is made available to the stem section with a means.

11. The method according to claim 10, wherein the means is selected from one or more from the group consisting of treatment of the stem section and encapsulation of the stem section.

12. The method according to claim 10, wherein substance is one or more of binders and a fibrous material.

13. The method according any of claims 9 to 11 wherein the compound exhibiting inhibitory activity towards pests and/or pathogens is one or more selected from an insecticide, termiticide, acaricide, miticide, nematicide, molluscide and fungicide.

14. The method according to claim 13 wherein the compound is one or more of cyanoimine, acetamiprid, nitromethylene, nitenpyram, clothianidin, dimethoate, flubendamide, dinotefuran, fipronil, lufenuron, pyripfoxyten, thiacloprid, fluxofenime, imidacloprid, thiamethoxam, beta cyfluthrin, fenoxycarb, lamda cyhalothrin, diafenthiuron, pymetrozine, diazinon, disulphoton; profenofos, furathiocarb, cyromazin, cypermethrin, tau-fluvalinate, tefluthrin, chlorantraniliprole Flonicamid, Metaflumizone, Spirotetramat, or Bacillus thuringiensis products.

15. The method according to claim 13 wherein the compound is one or more of azoxystrobin; acibenzolor s-methyl, bitertanol; carboxin; Cu₂O; cymoxanil; cyproconazole; cyprodinil; dichlofluamid; difenoconazole; diniconazole; epoxiconazole; fenpiclonil; fludioxonil; fluoxastrobin, fluquiconazole; flusilazole; flutriafol; furalaxyl; guazatin; hexaconazole; hymexazol; imazalil; imibenconazole; ipconazole; kresoxim-methyl; mancozeb; metalaxyl; R-metalaxyl; metconazole; myclobutanil, oxadixyl, pefurazoate; paclobutrazole, penconazole; pencycuron; picoxystrobin; prochloraz, propiconazole; pyroquilone; SSF-109; spiroxamin; tebuconazole; thiabendazole; thiram, tolifluamide; triazoxide; triadimefon; triadimenol; trifloxystrobin, triflumizole; triticonazole uniconazole, a compound of formula A or a compound of formula B

16. A method of protecting a stem section of a crop plant defined in claim 1, a plant or part of the plant that grows at a later point in time against attack by a pest and/or pathogen comprising (i) making available to the stem section a compound defined in any one of claims 13 to 15, and/or (ii) applying a compound defined in any one of claims 13 to 15 to the locus of the stem section.

17. A method of protecting a stem section of a crop plant defined in claim 1, a plant or part of the plant that g ows at a later point in time against the phytotoxicity of a pesticide (e.g. herbicide) applied at a later point in time, which comprises treating the stem section, preferably before it is sown of planted, with a compound having antidotal characteristics to that pesticide.

18. A method of improving the growth of a crop plant defined in claim 1 comprising either (i) making available to the stem section one or more compounds selected from compounds that exhibit either stimulatory or growth-promoting activity (*e.g.,* nutrients, fertilizers, micronutrient donors, biological agents, inoculants, antibiotics); that exhibit inhibitory activity towards pests and/or pathogens (e.g. a pesticide); or that exhibit safening activity against pesticide (e.g a safener), and/or (ii) applying to the locus of the stem section one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); or that exhibit safening activity against pesticide (e.g a safener).

19. The method according to either claim 16 or 18, wherein the means is selected from one or more from the group consisting of treatment of the stem section and encapsulation of the stem section.

20. A stem section of a crop defined in claim 1 having available therefor one or more compounds selected from compounds that exhibit either stimulatory or growth-promoting activity (e.g., nutrients, fertilizers, micronutrient donors, biological agents, inoculants, antibiotics); that exhibit inhibitory activity towards pests and/or pathogens (e.g. a pesticide); and/or exhibit safening activity against pesticide (e.g. a safener).

21. A stem section of a crop defined in claim 1 having available therefor one or more substances that ensures germination and/or storage of the stem section.

22. The stem section according to claim 21 further having available therefor one or more compounds defined in claim 20.

23. The stem section according to any one of claims 20 to 22, wherein the compounds and/or substances are adhered on the stem section.

24. The stem section according to any one of claims 20 to 23 wherein the compounds and/or substances are encapsulated with the stem section.

25. A stem section of a crop defined in claim 1 or claim 4 obtainable by a mechanical means or non-manual.
